# EUROPÄISCHE PATENTSCHRIFT

(11) **EP 2 567 798 B1**
(45) Veröffentlichungstag und Bekanntmachung des Hinweises auf die Patenterteilung: **17.07.2013**
(21) Anmeldenummer: 11180905.9
(22) Anmeldetag: 12.09.2011
(51) Int. Cl.: B27N 1/00

(54) **Verwendung von Polyamin in Holzwerkstoffen zur Reduzierung der Emission von Aldehyden und/oder Säuren**
Use of polyamine in wood materials for reducing the emission of aldehydes and/or acids
Utilisation de polyamine dans des matières dérivées du bois pour la réduction de l'émission d'aldéhydes et/ou d'acides

(43) Veröffentlichungstag der Anmeldung: 13.03.2013
(73) Patentinhaber: Kronotec AG, 6006 Luzern (CH)
(72) Erfinder:
(74) Vertreter: Morawski, Birgit

(56) Entgegenhaltungen:
- EP-A1- 1 900 788
- EP-A1- 2 172 333
- WO-A2-2008/012113

## Beschreibung

Die vorliegende Anmeldung betrifft die Verwendung von mindestens einem Polyamin nach Anspruch 1, ein Verfahren zur Herstellung von Holzwerkstoffplatten unter Verwendung von mindestens einem Polyamin gemäß Anspruch 12.

Holzfaserdämmstoffplatten bestehen bekanntermaßen aus Lignozellulose oder lignozellulosehaltigen Materialien, wie Holzfasern. Lignozellulose umfasst als Bestandteile Zellulose, Hemizellulose und Lignin. Zellulose ist ein langkettiges Makromolekül, bestehend aus Glukoseeinheiten, Hemizellulose ein kurzkettiges, verzweigtes Makromolekül aus Pentosen und Lignin ein dreidimensionales Makromolekül aus Methoxyphenylpropaneinheiten. Zellulose und Hemizellulose bilden die Gerüstsubstanz der Zellwand, während Lignin als Füllsubstanz im Zellgerüst die Verholzung verursacht.

Im Verlaufe der Herstellung von Holzfaserdämmstoffen und insbesondere bedingt durch den Herstellungsprozess der Holzfasern entstehen bzw. werden eine Vielzahl von flüchtigen organischen Verbindungen freigesetzt. Zu den flüchtigen organischen Verbindungen, auch VOCs genannt, gehören flüchtige organische Stoffe, die leicht verdampfen bzw. bereits bei niedrigeren Temperaturen, wie zum Beispiel Raumtemperatur als Gas vorliegen.

Zu den leicht flüchtigen organischen Verbindungen (VOC) werden unter anderem Ameisensäure und Formaldehyd gezählt. In der holzverarbeitenden Industrie sind insbesondere die leicht flüchtigen organischen Aldehyde, wie Formaldehyd oder andere während des Verarbeitungsprozesses gebildete Aldehyde, wie Furfural von Bedeutung. Entsprechend betrifft die vorliegende Anmeldung die Reduzierung von Aldehyden, die entweder durch Zersetzungsprozesse der Holzbestandteile Zellulose, Hemizellulose und Lignozellulose gebildet werden, wie auch Formaldehyd, der insbesondere aus den verwendeten Bindemitteln freigesetzt wird.

Generell fallen die flüchtigen organischen Verbindungen entweder als Nebenprodukte während des Herstellungsprozesses an oder sie werden während der Nutzung des Produktes langsam an die Umgebungsluft abgegeben. Beide Vorgänge führen zu spezifischen Problemen, die den gesamten Herstellungsprozess verteuern können und/oder zu Geruchsbelästigungen in der Nutzung der Holzfaserplatten führen können.

Die flüchtigen organischen Verbindungen VOC sind entweder bereits im Holzmaterial vorhanden und werden während der Aufarbeitung aus diesem abgegeben oder sie werden nach derzeitigem Erkenntnisstand durch den Abbau von ungesättigten Fettsäuren gebildet, die wiederum Zersetzungsprodukte des Holzes sind. Typische Umwandlungsprodukte, die während der Bearbeitung auftreten, sind zum Beispiel Pentanal und Hexanal, aber auch Octanal, Octenal oder 1-Heptenal. Insbesondere Nadelhölzer, aus denen vorwiegend mitteldichte Faserplatten oder OSB-Platten hergestellt werden, enthalten große Mengen an Harz und Fetten, die zur Bildung von flüchtigen organischen Terpenverbindungen und Aldehyden führen. VOC und Aldehyde, wie Formaldehyd, können jedoch auch bei der Verwendung bestimmter Klebstoffe für die Herstellung der Holzwerkstoffe entstehen.

Bei der VOC-Emission liegen entsprechend ausschließlich holzbedingte Freisetzungen vor, die sich in Primäremissionen von leicht flüchtigen Holzinhaltstoffen, wie Terpenen oder chemischen Abbauprodukten, wie Essigsäure und so genannte Sekundäremissionen, wie zum Beispiel höhere Aldehyde, wie Pentanal oder höhere Carbonsäuren untergliedern.

In der Holzwerkstoffindustrie erfolgt die Herstellung der Holzfasern überwiegend nach dem TMP-Verfahren (Thermomechanical Pulping). In diesem Verfahren werden die Holzhackschnitzel, die meist als Ausgangsprodukte dienen, vorgedämpft und anschließend unter hohem Druck und hoher Temperatur zwischen Mahlscheiben zu Fasern aufgeschlossen. Bei diesem Prozess wird ein Teil der leicht flüchtigen Verbindungen, wie die erwähnten Terpene, Aldehyde, Säuren oder Alkohole aus der Holz- bzw. Fasermatrix ausgespült. Diese flüchtigen Verbindungen werden in das Prozesswasser abgegeben und/oder mit der Abluft in die Umgebung freigesetzt. Ein Teil dieser flüchtigen organischen Verbindungen verbleibt jedoch auch in den Fasern und wird erst zu einem späteren Zeitpunkt langsam abgegeben.

Wie oben beschrieben, entsteht aber auch eine Vielzahl von weiteren chemischen Verbindungen aufgrund des spezifischen Herstellungsprozesses der Holzfasern. Bei dem üblicherweise angewendeten TMP-Verfahren herrschen Temperaturen von ca. 180°C in Anwesenheit von Wasser und/oder Wasserdampf. Zusätzlich liegt der pH-Wert in der Holzmatrix bei ca. 4,5 bis 6. Aufgrund dieses leicht sauren pH-Wertes können säurekatalysierte Reaktionen in der Holzmatrix ablaufen. So wird zum Beispiel aus den Mono- und Disachariden, die in der Lignozellulose enthalten sind, Furfural als leicht flüchtiges Aldehyd gebildet.

Das Problem der Emission von organischen Komponenten aus den Holzfaserplatten, insbesondere von Aldehyden, ist umso gravierender, je niedriger die Dichte der hergestellten Holzfaserplatten ist. Während bei einer Faserplatte mit erhöhter Dichte (HDF) oder einer mitteldichten Faserplatte (MDF) keine erhöhten Werte der leicht flüchtigen organischen Bestandteile ermittelbar ist, ist bei Holzfaserplatten unterhalb einer Rohdichte von ca. 250 kg/m³, wie zum Beispiel den LDF-Platten, eine erhebliche VOC-Emission zu verzeichnen. Diese VOC-Emission kann je nach Verwendung der Holzfaserplatten wie z.B. in Form von Holzfaserdämmstoffplatten und je nach Raumbeladung ein erhebliches Problem darstellen. Im Übrigen stellt die Emission von VOCs einen Nachteil für den an sich ökologischen Holzfaserdämmstoff im Vergleich zu anderen, beispielsweise mineralischen Dämmstoffen, dar.

Übliche Klebstoffe oder Bindemittel, wie sie derzeit in der Herstellung von Holzwerkstoffen verwendet werden, umfassen unter anderem Harnstoff-Formaldehyd-Klebstoffe, Melamin-Harnstoff-Phenol-Formaldehyd-Klebstoffe oder Melamin-Harnstoff-Formaldehyd-Klebstoffe und/oder Phenol-Formaldehyd-Klebstoffe. Weitere, üblicherweise als Bindemittel verwendete Verbindungen basieren auf Diisocyanaten (PMDI). Während des Herstellungsprozesses der Holzwerkstoffplatten unterliegen die verwendeten Bindemittel bzw. Klebstoffe einer thermischen Aktivierung, die unter anderem auch eine Freisetzung von Formaldehyd verursacht. Formaldehyd ist bekanntermaßen ein krebserregendes Mittel.

Aus den oben genannten Gründen ist es daher erstrebenswert, die Freisetzung von Formaldehyd und leicht flüchtigen organischen Verbindungen aus Holzwerkstoffplatten zu reduzieren.

Verschiedene Ansätze hierfür wurden in der Vergangenheit gewählt. So beschreibt die DE 10 2007 050 935 A1 ein Verfahren zur Herstellung von Holzwerkstoffen, wobei den Holzfasern vor dem Verpressen ein glutenhaltiger Klebstoff, ein milchproteinhaltiger Klebstoff, ein pflanzenproteinhaltiger Klebstoff oder Derivate dieser Klebstoffe zugesetzt werden. Glutenhaltige Klebstoffe sind Hautleim, Knochenleim, Lederleim; milchproteinhaltige Klebstoffe sind unter anderem Kaseinklebstoffe und pflanzenproteinhaltige Klebstoffe sind unter anderem Sojaklebstoffe.

In der US 2009/0130474 A1 werden Aldehyd-Fänger zu einem Holzmaterial oder Bindematerial zugegeben. Als typischer Aldehyd-Fänger werden hier Bisulfite, Pyrosulfite, wie zum Beispiel Natriumhydrogensulfit, Kaliumhydrogensulfit, Zinksulfit, Magnesiumsulfit oder Aluminiumsulfit, und Dithionite beschrieben.

Auch in der WO 2009/005974 A1 ist die Verwendung von Formaldehyd-Scavengers zur Entfernung von Formaldehyd aus verschiedenen Artikeln, wie zum Beispiel Laminat offenbart. Hier werden als typische Formaldehyd-Scavenger bzw. Formaldehyd-Fänger Tetraethylenpentamin, Natriumdisulfit und Natriummetabisulfit beschrieben.

WO 2008/012113 A2 beschreibt die Verwendung von in Holzwerkstoffen enthaltenden Polyaminen zur Senkung des Formaldehydgehaltes in der Umgebungsluft, wobei auf die Reduzierung des aus dem in den Bindemittel des Holzwerkstoffes abgegebenen Formaldehyds abgestellt wird. Die Polyamine werden zum einen entweder als Bindemittel verwendet, d.h. es wird in diesem Fall kein Formaldehyd-haltiges Harz verwendet, oder die Polyamine sind lediglich auf den äußeren Schichten des Holzwerkstoffes aufgetragen und nicht in Holzwerkstoffen enthalten.

EP 2 172 333A 1 offenbart lignocellulosehaltige Formkörper mit geringer Formaldehydemission hergestellt unter Verwendung eines spezifischen Bindemittels. Das Bindemittel kann Formaldehydfänger wie z.B. Ammoniak, Harnstoff, Melamin oder Polyamine enthalten.

Ein anderer Ansatz besteht in der Erhöhung des pH-Wertes in der Holzmatrix durch Zugabe von alkalischen Stoffen, um so die in der Holzmatrix ablaufenden säurekatalysierten Reaktionen zu verhindern bzw. zu reduzieren. Nachteilig dabei ist jedoch, dass die Zugabe von alkalischen Verbindungen, wie zum Beispiel Natronlauge zur Bildung von Essigsäure führt, die sich durch die Spaltung von Acetylgruppen der Hemizellulose durch die alkalische Verbindung bildet (siehe Roffael, E. et al., Holzzentralblatt 1990, 116: 1684-1685).

Der vorliegenden Erfindung liegt die technische Aufgabe zugrunde, die Emissionen, das heißt, die Emission an leicht flüchtigen organischen Verbindungen, wie den Aldehyden und Säuren, die insbesondere während eines wässrigen Holzaufschlusses freigesetzt werden, aus Holzfaserdämmstoffen bzw. Holzfaserdämmstoffplatten auf ein möglichst niedriges Niveau zu reduzieren, wobei in möglichst nur geringem Ausmaß in den Produktionsprozess eingegriffen werden soll. Darüber hinaus soll auf den Einsatz von das Endprodukt ungünstig beeinflussenden Verfahren oder Produkten verzichtet werden.

Die gestellte Aufgabe wird durch die Verwendung von mindestens einem Polyamin gemäß den Merkmalen des Anspruchs 1 gelöst.

Gemäß der vorliegenden Erfindung wird mindestens ein Polyamin in Holzwerkstoffen zur Reduzierung der Emission von während des wässrigen Holzaufschlusses freigesetzten Aldehyden und/oder organischen Säuren verwendet.

Bei Verwendung von basischem Polyamin, insbesondere in Form eines Bindemittels, hat sich erstaunlicherweise gezeigt, dass die Verwendung des Polyamins zu einer deutlichen Reduzierung der Emission von Aldehyden und von Säuren, insbesondere organischen Säuren führt.

Insbesondere hat sich im Vergleich zur Verwendung von anorganischen Basen, wie Natronlauge gezeigt, dass die Reduzierung der Aldehydemission bei Verwendung der organischen basischen Verbindung Polyamin im Vergleich zur Verwendung von Natronlauge annähernd gleich ist, jedoch die Emission von organischen Säuren, wie zum Beispiel Essigsäure bei Verwendung des Polyamins drastisch reduziert wird.

Die gleichzeitige Reduzierung der Emission von Aldehyden und organischen Säuren konnte demnach bei der Verwendung von basischen Substanzen auf Basis von anorganischen Salzen, wie zum Beispiel der Natronlauge, nicht beobachtet werden. Die Zugabe von basischen anorganischen Substanzen führte, wie ausgeführt, zwar zu einer Reduzierung der Aldehydemission, wobei es jedoch zu einem starken Anstieg der Säureemission kam. Die Wirkung eines Polyamins in Holzwerkstoffen, insbesondere Holzfaserdämmstoffplatten, kann also auch in Form eines Aldehyd-Scavenger und/oder Säure-Scavenger beschrieben werden.

Die Verwendung von mindestens einem Polyamin in Holzwerkstoffen, insbesondere Holzfaserdämmstoffplatten, führt ebenfalls zu einer Verringerung des Anteils an notwendigerweise einzusetzendem Bindemittel, was zu einer Kostenreduzierung und somit zur Herstellung von kostengünstigeren Holzfaserdämmstoffplatten führt. So kann der Bindemittelanteil um 20 bis 40% reduziert werden.

In einer Ausführungsform der vorliegenden Erfindung wird als Polyamin ein Polyalkylenimin verwendet. Das Polyalkylenimin ist bevorzugterweise ein Polyethylenimin gemäß der allgemeinen Formel -[CH₂-CH₂-NH]ₙ - mit n größer 1 und stellt insbesondere ein kationisches Polyethylenimin dar.

Unter den Polyaminen wird entsprechend die Verwendung von Polyalkyleniminen bevorzugt. Polyalkylenimine sind geradlinige oder verzweigte, sekundäre und tertiäre Aminogruppen enthaltene Polymere. In einer Ausführungsform umfasst die Zusammensetzung mindestens ein Polyalkylenimin, wobei die Stickstoffatome durch C₁-C₁₈, bevorzugt C₂-C₈ gesättigte, ungesättigte, geradlinige und/oder verzweigte Kohlenwasserstoffketten verbunden sind.

In einer weiteren bevorzugten Ausführungsform der vorliegenden Erfindung weist das mindestens eine Polyamin an mindestens einem Stickstoffatom einen Substituenten R auf. Dieser Substituent R kann an jedem der substituierbaren Stickstoffatome vorhanden sein, wobei bevorzugt ein Polyamin gemäß der allgemeinen Formel -[CH₂-CH₂-NR]ₙ- mit n größer 1 vorliegt. Entsprechend dieser Formel ist jedes Stickstoffatom mit einem Substituenten R versehen.

Es ist jedoch auch möglich, dass lediglich jedes zweite Stickstoffatom in dem Polyamin, insbesondere Polyethylenimin mit einem Rest R substituiert vorliegt.

Die Polyalkylenimine können wie beschrieben substituiert vorliegen und weitere Derivatisierungen aufweisen. Beispielsweise können die Polyalkylenimine mit Säuren, wie z.B. Fettsäuren oder gesättigten und ungesättigte Carbonsäuren, Anhydriden, Säurechloriden oder Säureamiden, vorliegen.

Der Substituent R an dem mindestens einen Stickstoffatom des Polyamins ist bevorzugt aus einer Gruppe enthaltend substituiertes und nicht-substituiertes Alkyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl, die durch -O- oder - NH- unterbrochen sein können, ausgewählt.

Insbesondere ist es bevorzugt, wenn der Substituent R an mindestens einem Stickstoffatom des Polyamins ausgewählt ist aus einer Gruppe umfassend substituiertes und nicht-substituiertes C₁-C₃₀-Alkyl, insbesondere C₅-C₂₅-Alkyl, substituiertes und nicht-substituiertes C₂-C₆-Alkenyl, substituiertes und nicht-substituiertes C₂-C₆-Alkenyl und substituiertes und nicht-substituiertes C₆-C₁₀-Aryl.

In einer besonders bevorzugten Ausführungsform ist der Substituent R an mindestens einem Stickstoffatom des Polyamins eine Aminomethyl-, Aminoethyl- oder Aminopropyl-Gruppe. Derartige Verbindungen, insbesondere bei Verwendung einer Aminoethylgruppe als Substituent R an jedem zweiten Stickstoffatom des als Polyamin verwendeten Polyethylenimins, sind auch unter dem Handelsnamen Luprasol bekannt.

Der Substituent R kann jedoch auch eine Hydroxymethyl-, Hydroxyethyl- oder Hydroxypropylgruppe sein. Wesentlich ist dabei, dass es sich um ein kationisches Polyamin handelt, welches in wässriger Lösung einen leicht basischen Charakter aufweist.

In einer weiteren Ausführungsform umfasst die Zusammensetzung mindestens ein Polyethylenimin als Polyamin. Die Polyethylenimine können in Form von quaternisierten Verbindungen vorliegen. Als weitere geeignete Polyethylenimine haben sich phosphonemethylierte und alkoxylierte Polyethylenimine erwiesen.

Der Begriff "substituiert", in Verwendung mit "Alkyl", "Alkenyl", "Aryl", etc., bezeichnet die Substitution eines oder mehrerer Atome, in der Regel H-Atome, durch einen oder mehrere der folgenden Substituenten, bevorzugt durch einen oder zwei der folgenden Substituenten: Halogen, Hydroxy, geschütztes Hydroxy, Oxo, geschütztes Oxo, C₃-C₇-Cycloalkyl, bicyclisches Alkyl, Phenyl, Naphtyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Alkinyl", wie hier verwendet, bezeichnet einen Rest der Formel R-C≡C-, insbesondere ein "C₂-C₆-Alkinyl". Beispiele für C₂-C₆-Alkinyle schließen ein: Ethinyl, Propinyl, 2-Butinyl, 2-Pentinyl, 3-Pentinyl, 2-Hexinyl, 3-Hexinyl, 4-Hexinyl, Vinyl sowie Di- und Tri-ine von geraden und verzweigten Alkylketten.

Der Begriff "Aryl", wie hierin verwendet, bezeichnet aromatische Kohlenwasserstoffe, beispielsweise Phenyl, Benzyl, Naphthyl, oder Anthryl. Substituierte Arylgruppen sind Arylgruppen, die, wie oben definiert, mit einem oder mehreren Substituenten, wie oben definiert, substituiert sind.

Der Begriff "Cycloalkyl" umfasst die Gruppen Cyclopropyl, Cyclobutyl, Cyclopentyl, Cyclohexyl und Cycloheptyl.

In einer Ausführungsform weist das verwendete Polyamin ein Molgewicht von kleiner 1000 g/mol auf. Polyamine mit einem Molgewicht von kleiner 1000 g/mol weisen eine Viskosität auf, die die Verarbeitbarkeit des Polyamins im Herstellungsprozess der Holzfaserplatten bzw. des Holzfaserdämmstoffes erleichtert. Polyamine mit höherem Molgewicht besitzen hingegen eine Viskosität, die ein Verdünnen der Zusammensetzung erforderlich bzw. notwendig machen.

Darüber hinaus weisen die Polyamine mit einem niedrigen Molekulargewicht einen hohen Anteil an primären Aminogruppen auf, die als Reaktionspartner für Aldehyde und andere reaktive Verbindungen zur Verfügung stehen. So bilden primäre Amine mit Aldehyden Schiff'sche Basen aus, die relativ stabil sind. Die Funktionalität der primären Aminogruppen ist neben dem Effekt der pH-Werterhöhung aufgrund der Basizität der Polyamine somit ebenfalls für die niedrige Emission von Aldehyden verantwortlich, da die Aldehyde mit den Amingruppen unter Ausbildung der Schiff'schen Basen wie erwähnt abreagieren. Ein weiterer Effekt der primären Aminogruppen besteht in der Reaktion der Aminogruppen mit den während der Herstellung der Holzfasern freigesetzten Säuren zu den entsprechenden Ammoniumsalzen.

In einer weiteren Ausführungsform wird das mindestens eine Polyamin mit mindestens einem weiteren Bindemittel eingesetzt.

Bevorzugt ist das weitere Bindemittel mindestens ein Isocyanat, ausgewählt aus einer Gruppe enthaltend aliphatische und aromatische Isocyanate. Als Bindemittel können jedoch auch Phenolharze und/oder Bikomponentenfasern zum Einsatz kommen.

Typischerweise können als aliphatische Isocyanate z.B. Hexamethylendiisocyanat (HDI), Isophorondiisocyanat (IPDI) und/oder 1,4-Cyclohexyldiisocyanat (CHDI) verwendet werden.

Als bevorzugte aromatische Polyisocyanate können Polymeres Diphenylmethandiisocyanat (PMDI) Toluylendiisocyanat (TDI) und/oder Diphenylmethandiisocyanat (MDI) zum Einsatz kommen, wobei PMDI besonders bevorzugt ist.

Das Isocyanat unterliegt bei seiner Verwendung als Bindemittel zwei chemischen Reaktionen. Zum einen bildet es in Gegenwart von Wasser Polyharnstoff aus. Parallel erfolgt die Anbindung an die Holzfasern durch Ausbildung einer Urethan-Bindung durch die Reaktion von Isocyanate mit den freien Hydroxy-Gruppen der Zellulose.

Wie oben ausgeführt, wird das mindestens eine Polyamin zur Reduzierung von während des wässrigen Holzaufschlusses freigesetzten Aldehyden eingesetzt. Wie oben ausführlich erläutert, erfolgt eine Freisetzung von Aldehyden während der hydrolytischen Aufarbeitung von Holz bzw. Lignozellulose. Dabei werden die Aldehyde aus den Grundbausteinen der Zellulose oder Hemizellulose gebildet. So wird Furfural aus Mono- und Disachariden der Zellulose bzw. Hemizellulose gebildet, während aromatische Aldehyde während des partiell stattfindenden hydrolytischen Aufschlusses von Lignin freigesetzt werden können.

Wie oben ebenfalls ausgeführt, wird das mindestens eine Polyamin zur Reduzierung von organischen Säuren verwendet. Organische Säuren fallen insbesondere als Spaltprodukte der Holzbestandteile Zellulose, Hemizellulose und Lignin an, wobei bevorzugt Alkansäuren, wie Essigsäure und Propionsäure oder aromatische Säuren gebildet werden.

Das mindestens eine Polyamin wird in einem Verfahren zur Herstellung einer Holzwerkstoffplatte, insbesondere einer Holzfaserdämmstoffplatte mit einer reduzierten

Emission von während des wässrigen Holzaufschlusses freigesetzten Aldehyden und/oder organischen Säuren verwendet, wobei das Verfahren die folgenden Schritte umfasst:
a) Herstellen von Holzfasern aus Holzhackschnitzeln,
b) In-Kontaktbringen der Holzfasern mit mindestens einem Polyamin mit den oben beschriebenen Merkmalen, und
c) Streuen der Mischung von Holzfasern und dem mindestens einen Polyamin aus Schritt b) auf ein Transportband und Verpressen der gebildeten Fasermatte.

Zur Herstellung der Holzfasern gemäß Schritt a) werden die Holzhackschnitzel zunächst gereinigt, anschließend zerfasert und getrocknet.

Das In-Kontaktbringen der Holzfasern der Holzfasern mit dem mindestens einen Polyamin in Schritt b) erfolgt bevorzugt in einem Blow-Line-Verfahren, bei dem das Polyamin in den Holzfaserstrom eingespritzt wird.

Es ist auch möglich, das Polyamin mit einem weiteren Bindemittel während der Dosierung in der Blow-Line-Zuführung zu mischen und anschließend in den Holzfaserstrom einzuspritzen. Das Polyamin und das weitere Bindemittel können aber auch nacheinander mit dem Holzfaserstrom kontaktiert werden. Dabei können 0.5 bis 3 % des Polyamins auf die Holzfasern aufgetragen werden. Das Verhältnis des Polyamins zu Holzfasern liegt bei 1 : 3 bis 1 : 10.

Es ist bevorzugt, wenn die Holzfasern in Abhängigkeit vom verwendeten Anlagetypen und Verfahren vor oder nach dem Aufbringen des Polyamins gemäß Schritt b) mit einem geeigneten Bindemittel zusätzlich beleimt werden.

In dem vorliegenden Verfahren wird das mindestens eine Polyamin bevorzugt in Form einer wässrigen Lösung mit einem Anteil von mindestens 20 Gew%, bevorzugt von mindestens 40 Gew%, insbesondere bevorzugt von mindestens 50 Gew% verwendet.

Es ist aber auch denkbar, das Polyamin mittels Trockenbeleimung mit den Holzfasern in Kontakt zu bringen. Das Polyamin oder eine Mischung des Polyamins mit einem weiteren Bindemittel wird hier durch extrem feines Verdüsen auf die getrockneten Holzfasern aufgebracht. Eine derartige Trockenbeleimung reduziert den Leimverbrauch gegenüber einer Blow-Line-Beleimung drastisch.

Nach Streuen der Mischung aus Holzfasern und dem mindestens einem Polyamin auf ein Transportband unter Ausbildung einer Holzfasermatte erfolgt zunächst ein Vorpressen, bei der die Dicke der Matte im Rahmen einer kalten Vorverdichtung reduziert wird. Anschließend wird eine Mattenbesäumung durchgeführt, während der Seitenstreifen von der Fasermatte abgetrennt werden und die Seitenstreifen in den Prozess zurückgeführt werden.

Die anschließende Heizpressung der Fasermatte wird üblicherweise bei Temperaturen bis zu 230°C durchgeführt, wobei das Bindemittel und auch das Polyamin aktiviert werden und es zu einer festen Verbindung zwischen den Holzfasern und dem Bindemittel kommt. In der Endbearbeitung wird die Fasermatte schließlich auf die gewünschten Maße reduziert und gekühlt.

Es ist ebenfalls vorstellbar, dass neben dem Polyamin und dem weiteren Bindemittel weitere Bindemittel, wie Granulat aus Kunststoff zugesetzt werden.

Die vorliegende Holzwerkstoffplatten bzw. Holzfaserdämmstoffplatten weisen bevorzugt eine reduzierte Aldehydemission, insbesondere eine Furfuralemission von weniger als 10 µg/m³, insbesondere von weniger als 6 µg/m³, und eine reduzierte Säureemission, insbesondere eines Essigsäureemission von weniger als 1000 µg/m³, insbesondere von weniger als 500 µg/m³ auf.

Die Erfindung wird nachfolgend an einem Ausführungsbeispiel näher erläutert.

### Beispiel 1

Die Wirksamkeit der Verwendung von einem Polyamin in Form eines Polyethylenimins zur Reduzierung der Emission von Aldehyden und Säuren in einer Dämmstoffplatte im Vergleich zur Verwendung von einer basisch anorganischen Verbindung, wie Natronlauge wurde durch einen vergleichenden Test bestimmt.

Zu diesem Zwecke wurden zwei Holzfaserdämmstoffplatten hergestellt, wobei zur Herstellung einer ersten Holzdämmstoffplatte 2% Natronlauge im Kocher auf die Holzfasern aufgetragen wurde und zur Herstellung einer zweiten Holzfaserdämmstoffplatte 2% Polyimin (Polyethylenimin) in der Blow-Linie auf die Fasern aufgesprüht wurde. Das Polyimin wurde vor der Zugabe in der Blow-Linie mit Wasser auf 50% verdünnt.

Bei der Herstellung der beiden Dämmstoffplatten wurde ansonsten mit gleichen Produktionsparametern gearbeitet. Nach Ihrer Herstellung wurden die beiden Dämmstoffplatten in Prüfkammern für sieben Tage gelagert und anschließend die Emission von Essigsäure und Furfural gemessen.

Wie aus der folgenden Tabelle entnehmbar, erfolgt bei Zugabe von 2% Natronlauge auf die Fasern gemäß der Versuchsnummer 2 eine Reduzierung der Emission von Furfural von 19 µg/m³ im Falle der Nullprobe auf 8 µg/m³. Hingegen stieg die Emission der Essigsäure bei Verwendung von Natronlauge rapide an.

| **Versuchsnummer** | **Bezeichnung** | **Emission Essigsäure [µg/m3]** | **Emission Furfural [µg/m3]** |
|---|---|---|---|
| 1 | Nullprobe | 999 | 19 |
| 2 | 2% NaOH auf Fasern | 2322 | 8 |
| 3 | 2% Polyimin auf Fasern | 485 | 6 |

Wird nun anstelle der Natronlauge ein basisches Polyimin den Fasern zugegeben, reduziert sich die Emission des Furfurals im Vergleich zur Nullprobe, zeigt aber keinen nennenswerten Unterschied im Vergleich zur Verwendung von Natronlauge. Hingegen erfolgt eine fast fünffache Reduktion der Emission von Essigsäure bei Verwendung von Polyimin im Vergleich zur Verwendung von Natronlauge.

Insgesamt kann gesagt werden, dass die Zugabe von NaOH als basische anorganische Substanz zwar zu einer Reduzierung der Aldehydemission führt, jedoch gleichzeitig ein starker Anstieg der Essigsäure-Emission erfolgt. Die Verwendung von Polyimin führt hingegen sowohl zu einer deutlichen Reduzierung der Aldehydemission im Vergleich zur Nullprobe als auch zu einer deutlichen Reduzierung der Emission von Essigsäure sowohl im Vergleich zur Nullprobe als auch im Vergleich zur Verwendung von NaOH.

Die Blow-Line Zugabe stellt einen weiteren Vorteil des Polyimins gegenüber den anorganischen basischen Verbindungen, wie NaOH, dar, da die Dosierung in einem Kocher gegen einen erheblichen Gegendruck erfolgen muss. Die Dosierung der Natronlauge in der Blow-Line hat jedoch im Hinblick auf die Reduktion der Furfuralemission einen deutlich geringeren Effekt, da die Bildung des Furfurals zum überwiegenden Teil im Kocher erfolgt. Auch dieser Effekt weist auf das enorme Potential des Polyimins als Aldehyd-Scavenger hin.

## Patentansprüche

1. Verwendung von mindestens einem Polyamin in Holzwerkstoffen zur Reduzierung der Emission von während des wässrigen Holzaufschlusses freigesetzten Aldehyden und/oder organischen Säuren.

2. Verwendung nach Anspruch 1, **dadurch gekennzeichnet, dass** das mindestens eine Polyamin ein Polyalkylenimin ist.

3. Verwendung nach Anspruch 1 oder 2, **dadurch gekennzeichnet, dass** das mindestens eine Polyamin ein Polyethylenimin gemäß der allgemeinen Formel -[CH₂-CH₂-NH]ₙ- mit n größer 1, insbesondere ein kationisches Polyethylenimin ist.

4. Verwendung nach einem der vorhergehenden Ansprüche, **dadurch gekennzeichnet, dass** das mindestens eine Polyamin an mindestens einem N-Atom einen Substituenten R aufweist.

5. Verwendung nach Anspruch 4, **dadurch gekennzeichnet, dass** der Substituent R an mindestens einem N-Atom des Polyamins ausgewählt ist aus einer Gruppe enthaltend substituiertes und nicht-substituiertes Alkyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl, die durch -O- oder -NH- unterbrochen sein können.

6. Verwendung nach Anspruch 4 oder 5, **dadurch gekennzeichnet, dass** der Substituent R an mindestens einem N-Atom des Polyamins ausgewählt aus einer Gruppe umfassend substituiertes und nicht-substituiertes C₁-C₃₀-Alkyl, insbesondere C₅-C₂₅-Alkyl, substituiertes und nicht-substituiertes C₂-C₆-Alkenyl, substituiertes und nicht-substituiertes C₂-C₆-Alkinyl und substituiertes und nicht-substituiertes C₆-C₁₀-Aryl.

7. Verwendung nach einem der Ansprüche 4 bis 6, **dadurch gekennzeichnet, dass** der Substituent R an mindestens einem N-Atom des Polyamins eine Aminomethyl-, Aminoethyl- oder Aminopropylgruppe ist.

8. Verwendung nach einem der vorhergehenden Ansprüche, **dadurch gekennzeichnet, dass** das mindestens eine Polyamin ein Molgewicht kleiner 1000 g/mol aufweist.

9. Verwendung nach einem der vorhergehenden Ansprüche, **dadurch gekennzeichnet, dass** das mindestens eine Polyamin in einem Gemisch mit mindestens einem weiteren Bindemittel eingesetzt wird.

10. Verfahren zur Herstellung einer Holzwerkstoffplatte mit einer reduzierten Emission von während des wässrigen Holzaufschlusses freigesetzten Aldehyden und/oder organischen Säuren umfassend die folgenden Verfahrensschritte:
a) Herstellen von Holzfasern aus Holzhackschnitzeln,
b) Inkontaktbringen der Holzfasern mit mindestens einem Polyamin nach einem der vorhergehenden Ansprüche, und
c) Streuen der Mischung von Holzfasern und dem mindestens einem Polyamin aus Schritt b) auf ein Transportband und Verpressen der gebildeten Fasermatte.

11. Verfahren nach Anspruch 10, **dadurch gekennzeichnet, dass** die Holzfasern vor oder nach dem Aufbringen des Polyamins gemäß Schritt b) beleimt werden.

12. Verfahren nach Anspruch 10 oder 11, **dadurch gekennzeichnet, dass** das mindestens eine Polyamin in Form einer wässrigen Lösung mit einem Anteil von mindestens 20 Gew%, bevorzugt von mindestens 40 Gew%, insbesondere bevorzugt von mindestens 50 Gew% verwendet wird.

## Claims

1. Use of at least one polyamine in woodbase materials to reduce the emission of aldehydes and/or organic acids released during aqueous digestion of wood.

2. Use according to Claim 1, **characterized in that** the at least one polyamine is a polyalkyleneimine.

3. Use according to Claim 1 or 2, **characterized in that** the at least one polyamine is a polyethyleneimine conforming to the general formula - [CH₂-CH₂-NH]ₙ- with n above 1, especially a cationic polyethyleneimine.

4. Use according to any preceding claim, **characterized in that** the at least one polyamine has a substituent R on at least one nitrogen atom.

5. Use according to Claim 4, **characterized in that** the substituent R on at least one nitrogen atom of the polyamine is selected from a group containing substituted and non-substituted alkyl, substituted and non-substituted aryl, substituted and non-substituted alkenyl, substituted and non-substituted alkynyl, substituted and non-substituted cycloalkyl, which may each be interrupted by -O- or -NH-.

6. Use according to Claim 4 or 5, **characterized in that** the substituent R on at least one nitrogen atom of the polyamine is selected from a group comprising substituted and non-substituted C₁-C₃₀-alkyl, especially C₅-C₂₅-alkyl, substituted and non-substituted C₂-C₆-alkenyl, substituted and non-substituted C₂-C₆-alkynyl and substituted and non-substituted C₆-C₁₀-aryl,

7. Use according to any of Claims 4 to 6, **characterized in that** the substituent R on at least one nitrogen atom of the polyamine is an aminomethyl, aminoethyl or aminopropyl group.

8. Use according to any preceding claim, **characterized in that** the at least one polyamine has a molecular weight below 1000 g/mol.

9. Use according to any preceding claim, **characterized in that** the at least one polyamine is used in a mixture with at least one further binder.

10. Process for producing a woodbase panel having a reduced emission of aldehydes and/or organic acids released during aqueous digestion of wood, comprising the steps of:
a) producing wood fibres from wood chips,
b) contacting the wood fibres with at least one polyamine according to any preceding claim, and
c) spreading the mixture of wood fibres and the at least one polyamine from step b) on a transportation belt and compression moulding the formed fibrous mat.

11. Process according to Claim 10, **characterized in that** the wood fibres are resinated before or after applying the polyamine as per step b).

12. Process according to Claim 10 or 11, **characterized in that** the at least one polyamine is used in the form of an aqueous solution having a proportion of at least 20% by weight, preferably of at least 40% by weight and more preferably of at least 50% by weight.

## Revendications

1. Utilisation d'au moins une polyamine dans des matériaux à base de bois pour la réduction de l'émission d'aldéhydes et/ou d'acides organiques libérés pendant le défibrage aqueux du bois.

2. Utilisation selon la revendication 1, **caractérisée en ce que** ladite au moins une polyamine est une polyalkylène-imine.

3. Utilisation selon la revendication 1 ou 2, **caractérisée en ce que** ladite au moins une polyamine est une polyéthylène-imine selon la formule générale -[CH₂-CH₂-NH]ₙ-, n étant supérieur à 1, en particulier une polyéthylène-imine cationique.

4. Utilisation selon l'une quelconque des revendications précédentes, **caractérisée en ce que** ladite au moins une polyamine présente un substituant R sur au moins un atome de N.

5. Utilisation selon la revendication 4, **caractérisée en ce que** le substituant R sur au moins un atome de N de la polyamine est choisi dans un groupe contenant alkyle substitué et non substitué, aryle substitué et non substitué, alcényle substitué et non substitué, alcynyle substitué et non substitué, cycloalkyle substitué et non substitué, qui peuvent être interrompus par -O- ou -NH-.

6. Utilisation selon la revendication 4 ou 5, **caractérisée en ce que** le substituant R sur au moins un atome de N de la polyamine est choisi dans un groupe comprenant C₁-C₃₀-alkyle substitué et non substitué, en particulier C₅-C₂₅-alkyle, C₂-C₆-alcényle substitué et non substitué, C₂-C₆-alcynyle substitué et non substitué et C₆-C₁₀-aryle substitué et non substitué.

7. Utilisation selon l'une quelconque des revendications 4 à 6, **caractérisée en ce que** le substituant R sur au moins un atome de N de la polyamine est un groupe aminométhyle, aminoéthyle ou aminopropyle.

8. Utilisation selon l'une quelconque des revendications précédentes, **caractérisée en ce que** ladite au moins une polyamine présente un poids moléculaire inférieur à 1000 g/mole.

9. Utilisation selon l'une quelconque des revendications précédentes, **caractérisée en ce que** ladite au moins une polyamine est utilisée dans un mélange présentant au moins un autre liant.

10. Procédé pour la préparation d'un panneau en matériau à base de bois présentant une émission réduite d'aldéhydes et/ou d'acides organiques libérés pendant le défibrage aqueux du bois comprenant les étapes de procédé suivantes :
a) préparation de fibres de bois à partir de copeaux de bois,
b) mise en contact des fibres de bois avec au moins une polyamine selon l'une quelconque des revendications précédentes, et
c) étalement du mélange de fibres de bois et de ladite au moins une polyamine de l'étape b) sur une bande transporteuse et compression de natte de fibres formée.

11. Procédé selon la revendication 10, **caractérisé en ce que** les fibres de bois sont encollées avant ou après l'application de la polyamine selon l'étape b).

12. Procédé selon la revendication 10 ou 11, **caractérisé en ce que** ladite au moins une polyamine est utilisée sous forme d'une solution aqueuse présentant une proportion d'au moins 20% en poids, de préférence d'au moins 40% en poids, en particulier de préférence d'au moins 50% en poids.
